# EUROPÄISCHE PATENTSCHRIFT

(11) **EP 2 748 119 B1**
(45) Veröffentlichungstag und Bekanntmachung des Hinweises auf die Patenterteilung: **30.11.2016**
(21) Anmeldenummer: 12743452.0
(22) Anmeldetag: 02.08.2012
(51) Int. Cl.: C04B 35/63, C25C 3/06, C04B 35/58

(54) **TITANDIBORID-GRANULATE ALS EROSIONSSCHUTZ FÜR KATHODEN**
TITANIUM DIBORIDE GRANULES AS EROSION PROTECTION FOR CATHODES
GRANULÉS DE DIBORURE DE TITANE EN TANT QUE PROTECTION CONTRE L'ÉROSION POUR DES CATHODES

(30) Priorität: 23.08.2011 DE 102011111331
(43) Veröffentlichungstag der Anmeldung: 02.07.2014
(73) Patentinhaber: 3M Innovative Properties Company, St. Paul, MN 55133-3427 (US)
(72) Erfinder: ENGLER, Martin, 87439 Kempten (DE); VICTOR, Georg, 87439 Kempten (DE)
(74) Vertreter: Mössner, Brigitte
(86) Internationale Anmeldenummer: PCT/EP2012/065189
(87) Internationale Veröffentlichungsnummer: WO 2013/026674

(56) Entgegenhaltungen:
- WO-A1-00/29644
- WO-A1-00/36187
- US-A- 3 766 025
- US-A- 4 544 524
- Maryam Mohamed Al Jallaf, Margaret Hyland, Barry Welch, Ali Al Zarouni: "Simplifying Protection System to Prolong Cell Life" In: "Light Metals 2011", 28. Februar 2011 (2011-02-28), John Wiley & Sons, Inc, Hoboken, NJ, USA, XP002685865, Seiten 1079-1084, das ganze Dokument

## Beschreibung

### Technisches Gebiet

Die vorliegende Erfindung betrifft Titandiborid-Granulate für den Einsatz zum Erosionsschutz von Kohlenstoff- oder Graphitkathoden in der Schmelzflusselektrolyse von Aluminium, sowie zur Reparatur von Löchern in den Kathoden von Elektrolysezellen.

### Hintergrund der Erfindung

Bei der Schmelzflusselektrolyse von Aluminium umfasst eine Elektrolysezelle eine Wanne aus Eisenblech oder Stahl, deren Boden mit einer Wärmeisolierung ausgekleidet ist. In dieser Wanne befinden sich mehrere nebeneinander angeordnete Kathodenblöcke, die durch feuerfeste Auskleidungsmasse abgedichtet sind und den Zellenboden bilden. Unter der Einwirkung des elektrischen Stroms findet in dieser Schmelzwanne die Umsetzung des Elektrolysebads zu Aluminium statt. Diese Reaktion erfolgt im Allgemeinen bei einer Temperatur von über 950 °C.

Um die Anforderungen an die thermische und chemische Beständigkeit zu erfüllen sowie die erforderliche elektrische Leitfähigkeit zu gewährleisten, sind die Kathodenblöcke aus kohlenstoffhaltigen Materialien hergestellt, die halbgraphitisch bis graphitisch sein können. Diese Materialien werden durch Extrudieren oder Vibrationsverdichten nach Durchmengen der Grundmaterialien geformt. Dabei kann eine Mischung aus Pech, kalziniertem Anthrazit und/oder Graphit eingesetzt werden, die dann bei etwa 1200°C gebrannt wird. Die aus diesen Mischungen hergestellte halbgraphitische Kathode wird gemeinhin als Kohlenstoffkathode bezeichnet. Es kann auch eine Mischung aus Pech und Koks mit oder ohne Zusatz von Graphit eingesetzt werden. In diesem Falle werden die Materialien bei etwa 800°C gebrannt und dann bei über 2400°C graphitgeglüht. Diese so hergestellte graphitische Kathode wird Graphitkathode genannt.

Die herkömmlicherweise eingesetzten Kohlenstoffkathoden haben nur mittelmäßige elektrische und thermische Eigenschaften, die den Betriebsbedingungen moderner Zellen, insbesondere denjenigen mit hoher Stromstärke, nicht mehr gerecht werden. Die Notwendigkeit, den Energieverbrauch, insbesondere in bestehenden Anlagen zu senken, hat den Einsatz von Graphitkathoden gefördert.

Die Graphitglühbehandlung der Graphitkathode bei über 2400°C ermöglicht es, die elektrische und thermische Leitfähigkeit zu erhöhen, wodurch Bedingungen geschaffen werden, die zu einem optimierten Betrieb einer Elektrolysezelle beitragen. Aufgrund der Senkung des elektrischen Widerstands der Kathode nimmt der Energieverbrauch ab. Außerdem kann auch die Stärke des in die Zelle eingeleiteten Stroms erhöht werden, wodurch eine Erhöhung der Aluminiumproduktion möglich wird. Die hohe Wärmeleitfähigkeit der Kathode ermöglicht dann das Ausleiten des Wärmeüberschusses, der durch die Erhöhung der Stromstärke erzeugt wird. Darüber hinaus sind die Graphitkathodenzellen elektrisch weniger instabil als die Kohlenstoffkathodenzelle, d.h. sie weisen eine geringere Schwankung der elektrischen Potentiale auf.

Es hat sich jedoch herausgestellt, dass die mit Graphitkathoden ausgestatteten Zellen eine geringere Lebensdauer haben als die mit Kohlenstoffkathoden ausgestatteten Zellen. Dies liegt daran, dass die Erosionsgeschwindigkeit eines Graphitkathodenblocks deutlich höher ist als die eines Kohlenstoffkathodenblocks.

Die geringe Erosionsbeständigkeit eines Graphitkathodenblocks ist somit sein Schwachpunkt, und es stellt sich die Aufgabe, die Erosionsbeständigkeit und somit die Lebensdauer der Graphitkathodenblöcke zu erhöhen.

Neben dem großflächigen Verschleiß des Kathodenblocks ist die Ausbildung lokaler, konisch geformter Löcher im Kathodenboden ein ernstes Problem. Diese Löcher wachsen von der Oberfläche der Kathode aus in Richtung Stromschiene. Wird die Stromschiene erreicht, führt dies zu einem starken Anstieg des Eisengehalts des Aluminiums und letztendlich zur Zerstörung der Zelle.

### Stand der Technik

Um den Verschleiß des Kathodenblocks zu reduzieren, gibt es verschiedene Möglichkeiten.

Die WO 00/29644 beschreibt eine Methode zur in situ-Bildung von Titandiborid an der Kathodenoberfläche, wodurch die Erosions- und Oxidationsbeständigkeit der Kathode erhöht werden soll.

Die WO 00/36187 beschreibt ein Verfahren zur Herstellung von Mehrschichten-Kathoden, bei dem mindestens eine metallboridhaltige Schicht über der Graphitkathode liegt. Neben Metallborid enthalten die Schichten außerdem noch Kohlenstoff. Dadurch soll ebenfalls die Erosions- und Oxidationsbeständigkeit der Kathode erhöht werden.

Die Verwendung von Titandiborid-Graphit-Gemischen als Schutzschichten auf Kathoden zur Erhöhung von deren Erosionsbeständigkeit ist, obwohl noch selten eingesetzt, in der Industrie gut bekannt. Ein Vorteil solcher Schichten ist die im Vergleich zu reinen Graphitkathoden signifikant erhöhte Benetzbarkeit durch Aluminium und die damit verbundene Möglichkeit, den Anoden-Kathoden Abstand zu reduzieren und damit den Energieverbrauch der Zelle deutlich zu verringern oder ihre Produktivität zu erhöhen. Ein gravierender Nachteil der bisher beschriebenen Titanborid-Graphit-Gemische sind die benötigten großen Mengen an teurem TiB2 (25-50% einer bis zu 100 mm starken Schicht) und der aufwendige Produktionsprozess für Mehrschichtenkathoden wie beispielsweise Co-Extrusion oder ein zusätzlicher Vibrationskompaktionsprozess. Außerdem besteht der komplementäre Teil der Schicht immer noch aus Graphit oder kohlenstoffbasierten Bindern, die erosiv angegriffen werden. Werden sie aus der Schicht herausgelöst, löst sich auch das TiB2 aus dem Verbund.

Die Veröffentlichung "Simplifying Protection System to Prolong Cell Life", Maryam Mohamed Al Jallaf, Margaret Hyland, Barry Welch, Ali Al Zarouni, Light Metals 2011, 1079-1084, beschreibt ein weiteres Verfahren zum Schutz der Kathode durch den Einsatz von Titandiborid. Dabei wird TiB2 in Form von splittrigen bzw. kantigen, nicht abgerundeten Granulaten in die Zelle eingebracht, welche sich durch die Strömung in der Zelle auf der Kathodenoberfläche verteilen. Bevorzugt sammelt sich das TiB2 in bereits bestehenden, durch Erosion entstandenen Vertiefungen an. Durch den Einsatz von Granulaten erhält man eine Kathodenoberfläche, die durch die Schüttung aus Titandiborid-Granulat vor Erosion geschützt wird. Die Schichtdicke einer Granulatschüttung kann gegenüber den TiB2-Graphit-Gemischen deutlich reduziert werden und es ist kein spezielles Herstellverfahren für die Kathode wie zuvor beschrieben notwendig. Der Nachteil dieses Verfahrens liegt in den weichen Granulaten. Diese haben eine nur geringe Druckfestigkeit und werden durch mechanische Belastung wie Druck und Reibung leicht auseinander gebrochen und pulverisiert. Dabei entstehende kleine TiB2-Partikel werden beim regelmäßigen Absaugen des schmelzflüssigen Aluminiums aus der Zelle mitgerissen und führen zu partikulären Verunreinigungen im Aluminium. Diese sind festigkeitsreduzierend und führen insbesondere bei Walzprozessen zu Fehlstellen. Ein weiterer Nachteil infolge der Granulatzerstörung ist die erreichbare Packungsdichte. Während mit optimierten Granulatgrößenverteilungen eine hohe Packungsdichte mit wenigen Freiräumen zwischen den einzelnen Granulaten möglich ist, verschlechtern zerstörte Granulate das Verhältnis von TiB2 zu freiem Zwischenraum.

Die US 4,544,524 beschreibt ein Verfahren zur Herstellung von Kathoden für die Aluminiumherstellung, bei dem Blöcke oder Formkörper aus einem Titandiborid/Kohlenstoff-Eutektikum hergestellt werden, die beispielsweise durch Sägen in die gewünschte Form gebracht werden.

Die US 3,766,025 beschreibt ein Verfahren zur Reparatur von Löchern in der Kathode, bei dem die Löcher mit granulatartigem Material gefüllt werden. Bei diesem Material kann es sich um Aluminiumoxid, Siliziumcarbid oder Bornitrid handeln, vorzugsweise um alpha-Aluminiumoxid. Die Herstellung der Granulate wird nicht beschrieben. Nachteilig an diesem Verfahren ist die fehlende elektrische Leitfähigkeit der Füllstoffe. Eine Verfüllung von Kathodenlöchern mit nicht elektrisch leitfähigen Materialien führt zu einer reduzierten Produktivität der Zelle und damit zu höheren Produktionskosten des Aluminiums. Das herkömmlicherweise zur Reparatur der Kathodenlöcher eingesetzte Aluminiumoxid hat zudem den Nachteil, dass die Korrosionsbeständigkeit gegenüber Kryolithschmelzen nicht zufriedenstellend ist.

Üblicherweise werden zur Reparatur von Löchern in der Kathode die verwendeten Füllstoffe lose oder mit einer Transportverpackung als Papiergebinde eingesetzt. Nachteilig bei diesem Verfahren ist, dass die für die Reparatur eingesetzten Füllstoffe nicht gut positioniert werden können und sich beim Absinken auf den Zellenboden nicht nur in den Löchern, sondern auch auf dem nicht beschädigten Zellenboden verteilen.

### Aufgabe der Erfindung

Aufgabe der Erfindung ist es daher, ein Material vorzusehen, mit dem unter Überwindung der Nachteile des Standes der Technik die Erosions- und Oxidationsbeständigkeit von Kohlenstoff- oder Graphitkathoden in Elektrolysezellen, die bei der Schmelzflusselektrolyse zur Herstellung von Aluminium eingesetzt werden, verbessert werden kann.

Aufgabe der Erfindung ist es weiterhin, Schüttkörper zur Reparatur von Kathodenlöchern in Elektrolysezellen zur Verfügung zu stellen, die gegenüber den im Stand der Technik eingesetzten Schüttkörpern eine verbesserte Produktivität der Zelle ermöglichen und eine verbesserte Korrosionsbeständigkeit gegenüber Kryolithschmelzen aufweisen.

Aufgabe der Erfindung ist es weiterhin, ein verbessertes Verfahren zur Reparatur von Löchern im Kathodenboden von Elektrolysezellen zur Verfügung zu stellen, durch das das Reparaturmaterial gezielter in die Reparaturstellen eingebracht werden kann.

### Zusammenfassung der Erfindung

Die vorstehende Aufgabe wird erfindungsgemäß gelöst durch Titandiborid-Granulate gemäß Anspruch 1, ein Verfahren zur Herstellung solcher Titandiborid-Granulate gemäß Anspruch 7, die Verwendung solcher Titandiborid-Granulate gemäß den Ansprüchen 10 und 11, sowie ein Verfahren unter Verwendung solcher Titandiborid-Granulate gemäß Anspruch 12.

Gegenstand der Erfindung sind somit Titandiborid-Granulate, umfassend Aggregate aus Titandiborid-Primärpartikeln, wobei die Titandiborid-Granulate eine abgerundete Form aufweisen und bruchfest sind, wobei die Druckfestigkeit der Titandiborid-Granulate, gemessen als Maximalkraft bis zum Bruch der Granulate im Druckversuch, wenigstens 5 N beträgt, und wobei die Titandiborid-Granulate eine Siebgröße zwischen 1 und 10 mm aufweisen.

Gegenstand der Erfindung ist weiterhin ein Verfahren zur Herstellung von solchen Titandiborid-Granulaten, umfassend die Schritte
a) Mischen von TiB₂-Pulver mit Bindemittel-Rohstoffen und/oder Hilfsstoffen und/oder Lösungsmitteln,
b) Herstellung von TiB₂-Granulat-Rohkörpern in der gewünschten Größe,
c) ggf. Trocknung und/oder Entbinderung zur Entfernung von Lösungsmittel und/oder Hilfsstoffen, und
d) thermische Behandlung der TiB₂-Granulat-Rohkörper zur Herstellung von TiB₂-Granulaten,
wobei als Bindemittel-Rohstoffe nanoskalige Bindemittel-Rohstoffe oder Precursor-Bindersysteme, die unter den Herstellbedingungen von Schritt b) bis d) nanoskalige Binderpartikel bilden, eingesetzt werden, wobei als Precursor-Bindersystem entweder Si0₂-bildende Bindemittel-Rohstoffe eingesetzt werden, und die Temperaturbehandlung in Schritt d) bei Temperaturen von wenigstens 900°C in inerter Atmosphäre erfolgt, oder als Precursor-Bindersystem Al₂O₃-bildende Bindemittel-Rohstoffe eingesetzt werden und die Temperaturbehandlung in Schritt d) bei Temperaturen von wenigstens 800°C, bevorzugt von wenigstens 1100°C in inerter Atmosphäre erfolgt oder wobei in Schritt a) keine Bindemittel-Rohstoffe eingesetzt werden und wobei die Temperaturbehandlung in Schritt d) bei Temperaturen von mindestens 1100°C, bevorzugt bei Temperaturen zwischen 1800 und 2100°C, besonders bevorzugt bei etwa 2000°C, in inerter Atmosphäre erfolgt.

Gegenstand der Erfindung ist weiterhin die Verwendung von erfindungsgemäßen Titandiborid-Granulaten zur Bedeckung von Kohlenstoff- oder Graphitkathoden in Elektrolysezellen, die bei der Schmelzflusselektrolyse zur Herstellung von Aluminium eingesetzt werden.

Gegenstand der Erfindung ist weiterhin die Verwendung von erfindungsgemäßen Titandiborid-Granulaten zur Reparatur von Löchern im Kathodenboden von Elektrolysezellen, die bei der Schmelzflusselektrolyse zur Herstellung von Aluminium eingesetzt werden.

Gegenstand der Erfindung ist weiterhin ein Verfahren zur Reparatur von Löchern im Kathodenboden von Elektrolysezellen, die bei der Schmelzflusselektrolyse zur Herstellung von Aluminium eingesetzt werden, umfassend die folgenden Schritte:
a) Herstellen von Titandiborid-Al-Kompositformkörpern aus erfindungsgemäßen TiB₂-Granulaten und Aluminium
b) Einbringen der Formkörper in die zu reparierenden Löcher der Kathode während des Betriebs der Zelle.

Die erfindungsgemäßen Titandiborid-Granulte haben gegenüber herkömmlichen Titandiborid-Graphit-Gemischen den Vorteil, dass die vollständige Abwesenheit von Graphit aus der Funktionsfläche der Kathode zu einer starken Reduzierung des erosionsbedingten Verschleißes und damit einer Verlängerung der Standzeit der Kathode führt. Durch die nur aus Titandiborid bestehende Kathodendeckschicht können geringere Schichtstärken als bei Titandiborid-Graphit-Gemischen realisiert werden. Durch das Einbringen der Titandiboridgranulate auf die Kathode nach dem Einbau der Kathode in die Elektrolysezelle kann zudem auf aufwändige Co-extrusions- oder zusätzliche Vibrokompaktierungsprozesse, die bei den herkömmlichen Titandiborid-Graphit-Gemischen notwendig sind, verzichtet werden, so dass insgesamt die Herstellkosten der Kathode deutlich reduziert werden können.

Gegenüber den bekannten weichen TiB₂-Granulaten haben die erfindungsgemäßen Titandiborid-Granulate den Vorteil, dass sie mechanisch stabiler, d.h. abrieb- und bruchstabil und somit transportstabil sind und nicht durch Druck oder Reibung zerkleinert werden.

Die Bildung feiner Partikel, die beim regelmäßigen Absaugen des Aluminiums aus der Zelle mit ausgetragen werden, wird daher weitgehend vermieden, so daß die Eigenschaften des Aluminiums nicht negativ beeinflusst werden und Walzdefekte sowie Festigkeitseinbußen verringert werden.

Die harten bzw. druckfesten Granulate sind weiterhin darin vorteilhaft, dass durch gezielte Abmischung verschiedener Granulat- bzw. Kornfraktionen eingestellte hohe Packungsdichten über die Lebensdauer der Zelle erhalten bleiben und eine kompakte Schicht bilden, so dass die Kathode besser vor erosionsbedingtem Verschleiß geschützt wird.

Die erfindungsgemäßen Granulate sind weiterhin darin vorteilhaft, dass sie eine abgerundete Form aufweisen und sich daher auf der Kathodenoberfläche besser verteilen lassen.

Die erfindungsgemäßen Titandiborid-Granulate haben gegenüber herkömmlichen Granulaten, die zur Reparatur punktuell verschlissener Kathoden eingesetzt werden, den Vorteil, dass sie elektrisch leitfähig sind und die Produktivität der Zelle, und damit die Herstellkosten des Aluminiums, nicht negativ beeinflussen. Außerdem haben sie gegenüber dem herkömmlicherweise eingesetzten Al₂O₃ den Vorteil, dass das TiB₂ gegenüber Kryolithschmelzen korrosionsbeständiger ist.

Mit dem erfindungsgemäßen Verfahren zur Reparatur punktuell verschlissener Kathoden, d.h. von Löchern in der Kathode, bei dem die Titandiborid-Granulate in Form von TiB₂-Al-Ingots eingesetzt werden, ist es möglich, die Titandiborid-Granulate an der Reparaturstelle gezielt zu positionieren, ohne dass sie sich über eine größere Fläche verteilen. Die kompakten TiB₂-Al-Ingots sinken in das Loch in der Kathode ab und lösen sich dort auf, d.h. das Aluminium schmilzt und die TiB₂-Granulate verbleiben in der Schadstelle, die damit besser aufgefüllt werden kann als mit den herkömmlichen Verfahren.

### Detaillierte Beschreibung der Erfindung

Die erfindungsgemäßen TiB₂-Granulate sind mechanisch stabil und haben eine gegenüber den bekannten weichen Granulaten höhere Druckfestigkeit und Härte. Dadurch sind sie abrieb- und bruchfest sowie transport- und formstabil beim Umfüllen und beim Einbringen der Granulate in die Schmelzwanne der Al-Elektrolysezelle zur Bedeckung der Kathode, d.h. bei diesen Schritten wird die Granulatform und - struktur erhalten.

Die Druckfestigkeit der erfindungsgemäßen TiB₂-Granulate, gemessen als Maximalkraft bis zum Bruch im Druckversuch, beträgt wenigstens 5 N, vorzugsweise wenigstens 7 N, weiter vorzugsweise wenigstens 9 N und besonders bevorzugt wenigstens 12 N. Die Messung der Druckfestigkeit erfolgt in Anlehnung an die DIN 51104. Abweichend zur DIN 51104 ist die Verwendung von Zwischenplatten (siehe 3 in Bild 2 und Abschnitt 5.2 der DIN) nicht erforderlich, da die Festigkeit der Granalien im Vergleich zu gesinterten Keramiken niedriger ist. Abweichend zur DIN 51104 wird weiterhin auf die Berechnung einer auf eine Fläche bezogenen Bruchspannung verzichtet, und die Angabe der Druckfestigkeit erfolgt als Maximallast bis zum Bruch der Granalien (Bruchkraft).

Die erfindungsgemäßen TiB₂-Granulate umfassen vorzugsweise ein anorganisches Bindemittel, das geeigneterweise in einer Menge bis zu 10 Gew.-%, besonders bevorzugt höchstens 1 Gew.-%, bezogen auf das Gesamtgewicht der TiB₂-Granulate, enthalten sein kann.

Das anorganische Bindemittel umfasst vorzugsweise ein oxidisches Bindemittel. Vorzugsweise umfasst das oxidische Bindemittel eine Al-Verbindung, gewählt aus Aluminiumoxid (Al₂O₃), Aluminiumhydroxid (Al(OH)₃) und Böhmit (AlO(OH)), SiO₂ oder Kombinationen davon. Besonders bevorzugt ist das anorganische Bindemittel eine Al-Verbindung, vorzugsweise Al₂O₃.

Die Granulatgröße der erfindungsgemäßen TiB₂-Granulate beträgt 1 mm bis 10 mm. Vorzugsweise beträgt die Granulatgröße 2 bis 7 mm. Weiterhin ist es bevorzugt, dass wenigstens 80 Gew.-% der TiB₂-Granulate eine Granulatgröße von wenigstens 2 mm aufweisen. Die Granulatgröße wird hierbei durch eine übliche Siebanalyse ermittelt, so dass es sich bei der vorgenannten Granulatgrößer um die "Siebgröße" handelt. Eine Siebgröße zwischen 1 und 10 mm bedeutet somit, dass die Granulate ein Sieb mit einer Maschenweite von 10 mm passieren, jedoch ein Sieb mit einer Maschenweite von 1 mm nicht mehr passieren.

Die Form der erfindungsgemäßen Granulate ist nicht kantig, blockig oder splittrig, sondern abgerundet, sie kann "kartoffelförmig" bzw. kieseiförmig bis rundlich oder kugelig sein.

Die erfindungsgemäßen Granulate sind unter den Einsatzbedingungen bei der Al-Elektrolyse thermisch stabil.

Die erfindungsgemäßen TiB₂-Granulate können über ein Verfahren hergestellt werden, das die folgenden Schritte umfasst:
a) Mischen von TiB₂-Pulver mit Bindemittel-Rohstoffen und/oder Hilfsstoffen und/oder Lösungsmitteln,
b) Herstellung von TiB₂-Granulat-Rohkörpern in der gewünschten Größe,
c) ggf. Trocknung und/oder Entbinderung zur Entfernung von Lösungsmittel und/oder Hilfsstoffen, und
d) thermische Behandlung (Sintern) der TiB₂-Granulat-Rohkörper zur Herstellung von TiB₂-Granulaten.

Es ist möglich, die Schritte a) und b) zu kombinieren und in einem Arbeitsschritt durchzuführen. Ebenso können auch die Schritte c) und d) in einem Arbeitsschritt durchgeführt werden.

Als Ausgangsmaterial für die erfindungsgemäßen TiB₂-Granulate in Schritt a) dienen TiB₂-Pulver (Haufwerk von Primärpartikeln), in einer Feinheit und Reinheit typischer handelsüblicher Qualitäten, wie sie zur Herstellung von Sinterbauteilen zum Einsatz kommen. Die mittlere Partikelgröße (d₅₀) derartiger TiB₂-Pulver beträgt vorzugsweise etwa 2 - 20 µm.

Die Feinheit der TiB₂-Pulver (Primärpartikelgrößenverteilung, BET) hat einen Einfluß auf das Verarbeitungsverhalten im jeweiligen Verfahrensschritt (Mischen, Granulieren, Kompaktieren, Extrudieren) bzw. bedingt zur Erzielung einer definierten Endproduktgröße unterschiedliche Verarbeitungsparameter in unterschiedlichen Verarbeitungstechniken. Ein feineres Ausgangspulver benötigt mehr Flüssigkeit und längere Prozesszeiten, um eine gewisse Granulatgröße zu erreichen. Dies gilt auch für die Herstellung von Extrusionsmassen oder Pressmassen.

Werden zur Herstellung der erfindungsgemäßen TiB₂-Granulate Bindemittel-Rohstoffe zugesetzt, die temperaturstabile Bindemittel ausbilden, so werden als Bindemittel-Rohstoffe in Schritt a) anorganische Bindemittel-Rohstoffe oder Vorstufen solcher Stoffe eingesetzt, das heißt Stoffe, die beim Aushärten der TiB₂-Granulate in Schritt d) anorganische Bindemittel bilden (sogenannte Precursor-Bindersysteme). Es können oxidkeramische Bindemittel-Rohstoffe oder Stoffe, die beim Aushärten der TiB₂-Granulate eine Oxidkeramik bilden, eingesetzt werden. Es können SiO₂-basierte oder SiO₂-bildende Bindemittel-Rohstoffe verwendet werden sowie Al₂O₃-basierte oder Al₂O₃-bildende Bindemittel-Rohstoffe. Bevorzugt sind Al₂O₃-basierte oder Al₂O₃-bildende Bindemittel-Rohstoffe, besonders bevorzugt Al₂O₃-bildende Bindemittel-Rohstoffe.

Um eine gute Bindewirkung zu erzielen, werden bevorzugt nanoskalige Bindemittel-Rohstoffe eingesetzt oder solche, die unter den Herstellbedingungen von Schritt b) bis d) nanoskalige Binderpartikel bilden (Precursor-Bindersysteme), da diese in sehr kleinen Konzentrationen und bei entsprechend niedrigeren Temperaturen die gewünschten Eigenschaften entfalten. Unter nanoskaligen Bindemitteln werden Bindemittel mit einer mittleren Partikelgröße von < 100 nm verstanden.
Beispiele für SiO₂-basierte Bindemittel-Rohstoffe sind fumed silica, fused silica, gefällte Kieselsäure und Quarzmehl.

Als SiO₂ bildende Precursor-Bindersysteme können beispielsweise Silane und Siloxane als Vorstufen für SiO₂-Bindephasen eingesetzt werden und beispielsweise Al(OH)₃ oder AIO(OH) als Vorstufen für Al₂O₃-Bindephasen.

Als SiO₂-basierte Bindemittel-Rohstoffe können auch handelsübliche SiO₂-Sole (sowohl wässrig als auch ethanolisch) eingesetzt werden, welche, je nach Ausgangskonzentration ggf. entsprechend verdünnt, direkt als Binderlösung zur Granulation eingesetzt werden können. Beispiele für geeignete handelsübliche wasserbasierte Produkte sind SiO₂-Sole der Firma NALCO und Köstrosol (Chemiewerk Bad Köstritz).

Falls die gewählten Bindemittel-Rohstoffe nicht bereits in flüssiger Form vorliegen, werden sie vorzugsweise in lösliche Form überführt, wobei als Lösungsmittel sowohl organische Lösungsmittel als auch Wasser oder Mischungen aus organischen Lösungsmitteln und Wasser eingesetzt werden können.

Ein Beispiel eines ethanolischen Bindemittel-Rohstoffs ist eine ethanolische Suspension von Nano-SiO₂-Partikeln und Silanen, erhältlich bei Fa. EPG (Produktbezeichnung MTKS) oder Fa. Inomat (Produktbezeichnung Inosil).

Beispiele für Al₂O₃-basierte Bindemittel-Rohstoffe sind handelsübliche Al₂O₃-Sole oder Sol-Gele wie beispielsweise Al₂O₃-Nanopartikel-Dispersionen mit Partikelgrößen < 100 nm. Weiterhin können sehr feine Korund-Pulver mit einer mittleren Partikelgröße (d₅₀) von < 1 µm eingesetzt werden.

Als Al₂O₃ bildende Precursor-Bindersysteme werden besonders bevorzugt AIO(OH)-Sol-Gele (Böhmit-Sol-Gele) eingesetzt, welche es ermöglichen, durch Variation der Konzentration den gewünschten Al₂O₃-Bindergehalt im Endprodukt in einem breiten Bereich einstellen zu können und welche darüber hinaus auch gute Verarbeitungseigenschaften bei der Granulation aufweisen.

Die Menge der Bindemittel-Rohstoffe ist vorteilhaft so zu wählen, dass die elektrische Leitfähigkeit der Titandiborid-Granulate nicht negativ beeinflusst wird.

Die Hilfsstoffe in Schritt a) können gegebenenfalls zugesetzte organische Bindemittel wie beispielsweise Acrylate (z.B. Duramax), Cellulosen (z.B. Degalan), Polysaccharide und Wachse (Stearin), sowie Presshilfsmittel und Plastifizierer sein, die bei der Temperaturbehandlung in Schritt d) zersetzt werden.

Vorzugsweise wird zur Granulation ein Lösungsmittel eingesetzt, sofern keine Trockenkompaktierung durchgeführt wird. Gewöhnlich wird Wasser zur Granulation bevorzugt. Andere Flüssigkeiten sind ebenfalls einsetzbar.

Zur Herstellung der erfindungsgemäßen TiB₂-Granulate in Schritt b) können verschiedene Verfahren zur Anwendung kommen, die zu einer abgerundeten Form der fertigen Granulate führen.

Ein mögliches Verfahren ist das Pelletieren. Dabei wird eine plastische, keramische Masse aus TiB₂-Pulver und ggf. einer Lösung, einem Sol oder einem Gel von Bindemittel-Rohstoffen beispielsweise mittels einer Balkenpresse und entsprechenden Siebeinsätzen zu Strängen oder Strangbruchgranulat verarbeitet. Das Pelletieren kann auch mittels eines Kneters und eines angeschlossenen Extruders und entsprechenden Formeinsätzen erfolgen, wodurch Stränge oder Strangbruchgranulat hergestellt werden kann. Die Stränge mit einem Durchmesser von beispielsweise 5 mm werden auf die gewünschte Länge von beispielsweise 5 mm geschnitten oder durch die Feuchte der Masse als Strangbruch erzielt.

Abhängig von der Konzentration und Menge der benötigten Binderlösung und von der Primärpartikelgrößenverteilung des eingesetzten TiB₂-Pulvers können dabei ggf. zusätzliche Prozesshilfsmittel wie Plastifizierer oder Presshilfsmittel eingesetzt werden. Als Prozesshilfsmittel können beispielsweise Acrylate (z.B. Duramax), Cellulosen (z.B. Degalan), Polysaccharide und Wachse (Stearin) eingesetzt werden. Die für die Strangbruchgranulation eingesetzte Rohmasse enthält geeigneterweise ca. 30 Gew.-% Lösungsmittel, vorzugsweise Wasser.

Ein weiteres mögliches Granulierverfahren ist das Tablettieren einer Mischung von TiB₂-Pulver und Lösungsmittel sowie ggf. einer Lösung von Bindemittel-Rohstoffen, welche nach Mischung/Homogenisierung mittels Pressen und entsprechenden Formeinsätzen zu Pellets, Tabletten, Linsen oder Schuppen kompaktiert werden. Ggf. können hier zusätzliche Prozesshilfsmittel wie Presshilfen eingesetzt werden. Die zum Tablettieren eingesetzte Pressmischung enthält geeigneterweise ca. 5 Gew.-% Lösungsmittel, vorzugsweise Wasser sowie ca. 10 Gew.-% trockene Presshilfsmittel. Als Presshilfsmittel können dabei beispielsweise Acrylate, Cellulosen, Polysaccharide und Wachse wie Stearin eingesetzt werden.

Ein weiteres mögliches Verfahren zur Herstellung der erfindungsgemäßen TiB₂-Granulate in Schritt b) ist die Trockenkompaktierung. Dazu wird in Schritt a) TiB₂-Pulver mit Presshilfsmitteln, beispielsweise mit Wachsen, und ggf. trockenen Bindemittel-Rohstoffen versetzt und kompaktiert. Die Presshilfsmittel werden entweder in Schritt d) wieder entfernt oder bereits vorher in Schritt c) in einem separat durchgeführten Entbinderungsschritt.

Ein bevorzugtes Verfahren zur Herstellung der erfindungsgemäßen TiB₂-Granulate ist die Aufbaugranulation von TiB₂-Pulvern zu Granulaten von beispielsweise 5 mm mittlerem Durchmesser. Die Aufbaugranulation führt regelmäßig zu abgerundeten bis rundlich-kugeligen Granulaten. Hierbei können die Schritte a) und b) gemeinsam durchgeführt werden, d. h. Mischen und Granulieren erfolgt in einem Schritt.

Hierbei können binderfreie TiB₂-Granulate oder TiB₂-Granulate mit geringem Binderanteil hergestellt werden. Als Lösungsmittel können organische Lösungsmittel oder Wasser eingesetzt werden, vorzugsweise Wasser.

Unter Berücksichtigung von Ansatzgröße bzw. zur Verfügung stehendem Granuliervolumen können bei der Aufbaugranulation unterschiedliche Granulatgrößen in gleicher Granulierzeit durch Variation der Binderlösungsmenge bzw. der Binderkonzentration hergestellt werden oder unterschiedliche Granulatdurchmesser werden in einem definierten Binderlösungsmittel-Bereich durch Variation der Granulierdauer aufgebaut.

Besonders bevorzugt ist für die Aufbaugranulation die Verwendung von Böhmit-Sol-Gel als Bindemittel, aufgrund der rheologischen Eigenschaften, welche das gebildete Aufbaugranulat bis zur Trocknung besser stabilisiert als Sole und als Dispersionen. Ein weiterer Vorteil dieses Bindemittels ist seine Wasserbasierung.

Die Bindemittel-Rohstoffe werden zur besseren Homogenisierbarkeit vorteilhafterweise in gelöster Form eingesetzt, in diesem Fall werden die Granulate vorzugsweise in Schritt c) getrocknet.

Der Trocknungsschritt c) dient der Entfernung des Lösungsmittels der eingesetzten Bindemittel-Rohstoffe bzw. des zur Granulation eingesetzten Wassers bzw. Lösungsmittels. Wird ein Trocknungsschritt als separater Verfahrensschritt durchgeführt, so muß das Lösungsmittel nicht im nachfolgenden Verarbeitungsschritt d) (Calcinieren, Härten/Sintern) berücksichtigt werden. Das beim Formgebungsschritt b) erhaltene grüne Granulat sollte wenig bewegt oder berührt werden, um Bruch und Abrieb gering zu halten oder zu vermeiden. Der Trocknungsschritt kann beispielsweise in einem Trockenschrank oder Umlufttrockenschrank, aber auch in einem Drehrohrofen oder im Wirbelschichtverfahren durchgeführt werden. Auch andere Trocknungsaggregate sind möglich.

Durch die thermische Behandlung der Granulate in Schritt d) wird deren Härte und mechanische Stabilität erhöht.

Im Fall von SiO₂-basierten Bindern erfolgt die Temperaturbehandlung bzw. das Härten vorzugsweise bei Temperaturen von wenigstens 1400 °C in inerter Atmosphäre.

Im Fall von Al₂O₃-basierten Bindern erfolgt die Temperaturbehandlung bzw. das Härten vorzugsweise bei Temperaturen von wenigstens 1600 °C in inerter Atmosphäre. Im Fall von SiO₂-bildenden Bindemittel-Rohstoffen (Precursor-Bindersystemen) erfolgt die Temperaturbehandlung bzw. das Härten bei Temperaturen von wenigstens 900 °C in inerter Atmosphäre.

Im Fall der besonders bevorzugten Al₂O₃-bildenden Bindemittel-Rohstoffe (Precursor-Bindersysteme) erfolgt die Temperaturbehandlung bzw. das Härten bei Temperaturen von wenigstens 800 °C, bevorzugt von wenigstens 1100 °C in inerter Atmosphäre.

Im Falle des besonders bevorzugt eingesetzten Bindemittel-Rohstoffs Böhmit ist eine Entwässerung der TiB₂-Granulate unter Umwandlung des Böhmits zu Al₂O₃ bei Temperaturen von wenigstens 800°C erforderlich. Bei 800 °C beginnt die Umwandlung von AIO(OH) in Al₂O₃, welche bei 1100 °C abgeschlossen ist. Durch die Temperaturbehandlung 1bei 1100 °C wird zudem die Härte und Stabilität merklich erhöht. Die Temperaturbehandlung bei 800 °C sollte vorzugsweise in inerter Atmosphäre für wenigstens 30 Minuten durchgeführt werden. Durch die inerte Atmosphäre wird die Oxidation des TiB₂ zu TiO₂ verhindert, welches in Kryolith/Al weniger beständig und elektrisch nichtleitend ist. Besonders bevorzugt wird die Temperaturbehandlung bei 1100 °C für wenigstens 60 Minuten in inerter Atmosphäre durchgeführt. Einerseits wird dadurch alles entstehende H₂O entfernt, andererseits beginnt das nanoskalige Al₂O₃ zu sintern und härtet so die Granulate.

Das Calcinieren bei 800°C und das Sintern bei 1100°C kann zweistufig oder auch einstufig durchgeführt werden.

Für binderfreie TiB₂-Granulate erfolgt die Temperaturbehandlung bei Temperaturen von wenigstens 1100 °C, bevorzugt bei Temperaturen zwischen 1800 und 2100 °C, besonders bevorzugt bei etwa 2000 °C in inerter Atmosphäre.

Bei den erfindungsgemäßen TiB₂-Granulaten, die ohne Verwendung von Bindemittel-Rohstoffen hergestellt wurden, handelt es sich um versinterte TiB₂-Granulate.
Die erfindungsgemäßen TiB₂-Granulate, die unter Verwendung von Bindemittel-Rohstoffen hergestellt wurden, umfassen nach der Temperaturbehandlung in Schritt d) außer den TiB₂-Primärpartikeln noch ein anorganisches Bindemittel, das im Fall von SiO₂-basierten oder SiO₂-bildenden Bindemittel-Rohstoffen SiO₂ ist, im Fall von Al₂O₃-basierten oder Al₂O₃-bildenden Bindemittel-Rohstoffen ist das anorganische Bindemittel Al₂O₃.

Für die Verwendung der erfindungsgemäßen TiB₂-Granulate als Erosionsschutz von Kohlenstoff- oder Graphitkathoden in Aluminum-Elektrolysezellen werden die TiB₂-Granulate vor oder nach der Befüllung und Inbetriebnahme der Elektrolysezelle auf dem Kathodenboden ausgebracht. Die Ausbringung und gleichmäßige Verteilung der Granulatschüttung ist durch die mechanische Stabilität der TiB₂-Granulate gewährleistet und durch die abgerundete Form der Granulate gegenüber Pellets und Tabletten einfacher möglich.

Die TiB₂-Granulate können auch als Reparaturmasse für im Betrieb der Elektrolysezelle gebildete Löcher in der Kathode eingesetzt werden. Dazu werden erfindungsgemäße TiB₂-Granulate während des Betriebs der Elektrolysezelle auf das Al-Bad oberhalb der Löcher ausgebracht. Die Granulate sinken auf den Zellenboden ab und füllen, zumindest teilweise, das zu reparierende Loch auf.

Um die TiB₂-Granulate für die Reparatur von Löchern besser in der Kathode einsetzen zu können, werden Titanborid-Al-Kompositformkörper aus TiB₂ und Aluminium (TiB₂-Al-Ingots) hergestellt. Dazu werden die TiB₂-Granulate in flüssige Al-Schmelzen geschüttet oder gerührt. Alternativ werden die TiB₂-Granulate mit Aluminium umgossen. Dazu werden die Granulate in entsprechende Formen oder Tiegel gefüllt und mit Al-Schmelze umgossen (Niederdruckguss, Schwerkraftguss, Kokillenguss).

Die resultierenden Formkörper bestehen aus einer dichten Granulat-, Tabletten- bzw. Pellet-Packung, deren Zwischenräume von der Al-Schmelze ausgefüllt bzw. vom erstarrten Metall durchdrungen und dadurch zusammen gehalten werden.

Werden zur Herstellung der Formkörper die erfindungsgemäßen TiB₂-Granulate mit anorganischen Bindern eingesetzt, so fördert der Binder bzw. die Binderbeschichtung des TiB₂-Granulats die Benetzung mit Schmelze.

Die so erhaltenen, mit den TiB₂-Granulaten gefüllten Aluminium-Formkörper (Blöcke, Zylinder oder dergleichen) sind geeigneterweise etwa 5 - 20 kg schwer.

Der TiB₂-gefüllte Aluminium-Formkörper wird oberhalb des zu reparierenden Lochs der Kathode in die Schmelzwanne gegeben und sinkt ab. Beim Absinken oder nach Eintauchen in das zu reparierende Loch schmilzt das Aluminium auf und gibt die TiB₂-Granulate frei.

### Beispiele und Referenzbeispiele

### Beispiel 1 (Binderfreies Aufbaugranulat)

4,5 kg TiB₂-Pulver (d₅₀ 11µm) werden im Eirich-Intensivmischer vorgelegt. Unter Rühren werden 500ml Wasser zugegeben und für insgesamt 10min granuliert. Das resultierende feuchte Aufbaugranulat wird für 12 Stunden im Umluft-Trockenschrank bei >80°C getrocknet.

Das getrocknete Granulat wird im Folgenden bei 1100°C für 1 Stunde unter Argon (strömend) geglüht.

Die Ausbeute an Granulat mit einer durch Siebanalyse bestimmten Größenverteilung von 0,2 mm bis 5 mm beträgt 75%. Die Ausbeute an Granulat mit einer Größenverteilung von 2 mm bis 5 mm beträgt 60%.

Das resultierende Granulat hat eine abgerundete Form, ist abrieb- und bruchfest und nicht zwischen den Fingern zerreib- bzw. zerdrückbar.

### Beispiel 2 (Aufbaugranulat mit Böhmit-Binder)

Zur Herstellung von Böhmit-Sol-Gel (Bindemittel-Rohstoff) wird Disperal der Fa. Sasol in Wasser dispergiert. Die Dispersion wird auf > 95 °C erwärmt und durch Zugabe von conc. HNO₃ peptisiert. Nach Abkühlen liegt das Gel vor (6 Gew.-% Al₂O₃).

4,5 kg TiB₂-Pulver (mittlere Partikelgröße d_{5.} 11 µm) werden im Eirich-Intensivmischer (Typ R02) vorgelegt. Unter Rühren werden 500 ml des Böhmit-Sol-Gels (6 Gew.-% Al₂O₃) zugegeben und für insgesamt 10 Minuten granuliert. Das resultierende feuchte Granulat wird für 12 Stunden im Umluft-Trockenschrank bei > 80°C getrocknet.

Das getrocknete Granulat wird im Folgenden bei 1100°C für 1 Stunde unter Argon (strömend) geglüht.

Die Ausbeute an Granulat mit einer durch Siebanalyse bestimmten Größenverteilung von 0,5 mm bis 8 mm beträgt 90%. Die Ausbeute an Granulat mit einer Größenverteilung von 2 mm bis 8 mm beträgt 70%.

Das resultierende Granulat hat eine abgerundete Form, ist abrieb- und bruchfest und nicht zwischen den Fingern zerreib- bzw. zerdrückbar.

### Beispiel 3 (Aufbaugranulat mit Böhmit-Binder)

Beispiel 2 wird wiederholt, jedoch wird das getrocknete Granulat nicht bei 1100 °C, sondern bei 800°C für 1 Stunde unter Argon (strömend) geglüht.

Das resultierende Granulat hat eine abgerundete Form, ist abrieb- und bruchfest und nicht zwischen den Fingern zerreib- bzw. zerdrückbar.

### Beispiel 4 (Binderfreies Aufbaugranulat)

Beispiel 1 wird wiederholt, jedoch wird das getrocknete Granulat nicht bei 1100 °C, sondern bei 2000°C für 1 Stunde unter Argon (strömend) geglüht.

Das resultierende Granulat hat eine abgerundete Form, ist abrieb- und bruchfest und nicht zwischen den Fingern zerreib- bzw. zerdrückbar.

### Beispiel 5 (Aufbaugranulat mit Böhmit-Binder)

Beispiel 2 wird wiederholt, jedoch wird das getrocknete Granulat nicht bei 1100 °C, sondern bei 2000°C für 1 Stunde unter Argon (strömend) geglüht.

Das resultierende Granulat hat eine abgerundete Form, ist abrieb- und bruchfest und nicht zwischen den Fingern zerreib- bzw. zerdrückbar.

### Beispiel 6 (Aufbaugranulat mit Böhmit-Binder)

4,5 kg TiB₂-Pulver (mittlere Partikelgröße d₅₀ 11 µm) werden im Eirich-Intensivmischer vorgelegt. Unter Rühren werden 400 ml des Böhmit-Sol-Gels aus Beispiel 2 (6 Gew.-% Al₂O₃) zugegeben und für insgesamt 10 Minuten granuliert. Das resultierende feuchte Granulat wird für 12 Stunden im Umluft-Trockenschrank bei > 80°C getrocknet.

Das getrocknete Granulat wird im Folgenden bei 1100°C für 1 Stunde unter Argon (strömend) geglüht.

Die Ausbeute an Granulat mit einer durch Siebanalyse bestimmten Größenverteilung von 0,2 mm bis 5 mm beträgt 95%. Die Ausbeute an Granulat mit einer Größenverteilung von 2 mm bis 5 mm beträgt 80%.

Das resultierende Granulat hat eine abgerundete Form, ist abrieb- und bruchfest und nicht zwischen den Fingern zerreib- bzw. zerdrückbar.

### Referenzbeispiel 1 (Binderfreies Filterkuchen-Granulat)

1,5 kg TiB₂-Pulver (d₅₀ 11µm) werden mittels Rührer in 4 Liter Wasser dispergiert. Die Suspension wird anschließend abfiltriert. Der entstehende Filterkuchen wird incl. Filterpapier für 12 Stunden im Umluft-Trockenschrank bei > 80°C getrocknet.

Der getrocknete Filterkuchen wird durch ein 5mm Sieb gebrochen und der resultierende Bruch erneut mittels 1mm Sieb fraktioniert. Die Ausbeute an Granulat mit einer Größenverteilung von 1 mm bis 5 mm beträgt 5%.

Das resultierende Granulat hat eine kantige bzw. splittrige Form, ist zwischen den Fingern leicht zerreib- bzw. zerdrückbar und somit nicht bruchfest.

### Referenzbeispiel 2 (Binderfreies Aufbau-Granulat)

Beispiel 1 wird wiederholt, jedoch wird das getrocknete Granulat anschließend keiner Temperaturbehandlung unterzogen.

Das resultierende Granulat hat eine abgerundete Form, ist jedoch zwischen den Fingern leicht zerreib- bzw. zerdrückbar und somit nicht bruchfest.

### Referenzbeispiel 3 (Aufbaugranulat mit Böhmit-Binder)

Beispiel 2 wird wiederholt, jedoch wird das getrocknete Granulat anschließend keiner Temperaturbehandlung unterzogen.

Das resultierende Granulat hat eine abgerundete Form, ist jedoch zwischen den Fingern leicht zerreib- bzw. zerdrückbar und somit nicht bruchfest.

### Referenzbeispiel 4 (Binderfreies Filterkuchen-Granulat)

Referenzbeispiel 1 wird wiederholt, jedoch wird das Filterkuchen-Granulat bei 1100°C für 1 Stunde unter Argon (strömend) geglüht.

Das resultierende Granulat hat eine kantige bzw. splittrige Form, ist zwischen den Fingern leicht zerreib- bzw. zerdrückbar und somit nicht bruchfest.

### Beispiel 7

Die hergestellten Granulate aus den Beispielen 1 bis 5 sowie aus den Referenzbeispielen 1 bis 4 wurden anschließend einer Druckfestigkeitsmessung unterzogen.

Die Druckfestigkeit einzelner Granulatkörper wurde in Anlehnung an die DIN 51104 mit einer Prüfgeschwindigkeit von 2 mm/min ermittelt (Universalprüfmaschine Zwick 1472 mit Software Softone TestXpert II für die Maschinensteuerung und Messdatenerfassung). Als Druckfestigkeit wurde die Maximallast beim Brechen/Zerfall einer Granalie (Prüfkörper) gemessen. Als Prüfvorrichtung dienten parallele Druckplatten aus gehärtetem Stahl. Die Messung erfolgte an einer Fraktion von Granalien im Größenbereich von 4 bis 5 mm.

Die Ergebnisse der Druckfestigkeitsprüfung, dargestellt als Maximalkraft bis zum Bruch der Granulate, sind in Tabelle 1 aufgeführt.

**Tabelle 1**

| **Beispiel Nr.** | **Beschreibung** | **Maximalkraft [N]** |
|---|---|---|
| Referenzbeispiel 1 | Binderfreies Filterkuchen-Granulat, getrocknet | nicht messbar (< 0,5) |
| Referenzbeispiel 2 | Binderfreies Aufbaugranulat, getrocknet | 0,85 |
| Referenzbeispiel 3 | Aufbaugranulat mit Böhmit-Binder, getrocknet | 2,08 |
| Referenzbeispiel 4 | Binderfreies Filterkuchen-Granulat, 1100 °C | 4,17 |
| Beispiel 1 | Binderfreies Aufbaugranulat, 1100 °C | 15,1 |
| Beispiel 2 | Aufbaugranulat mit Böhmit-Binder, 1100 °C | 20,5 |
| Beispiel 3 | Aufbaugranulat mit Böhmit-Binder, 800 °C | 15,2 |
| Beispiel 4 | Binderfreies Aufbaugranulat, 2000 °C | 100 |
| Beispiel 5 | Aufbaugranulat mit Böhmit-Binder, 2000 °C | 132 |

## Patentansprüche

1. Titandiborid-Granulate, umfassend Aggregate aus Titandiborid-Primarpartikeln, wobei die Titandiborid-Granulate eine abgerundete Form aufweisen und bruchfest sind, wobei die Druckfestigkeit der Titandiborid-Granulate, gemessen als Maximalkraft bis zum Bruch der Granulate im Druckversuch, wenigstens 5 N beträgt, und wobei die Titandiborid-Granulate eine Siebgröße zwischen 1 und 10 mm aufweisen.

2. Titandiborid-Granulate gemäß Anspruch 1, wobei die Druckfestigkeit der Titandiborid-Granulate wenigstens 7 N, vorzugsweise wenigstens 9 N und besonders bevorzugt wenigstens 12 N betragt.

3. Titandiborid-Granulate gemäß einem der Anspruche 1 oder 2, wobei die erfindungsgemäßen Titandiborid-Granulate ein anorganisches Bindemittel, vorzugsweise ein oxidisches Bindemittel, umfassen.

4. Titandiborid-Granulate gemäß Anspruch 3, wobei das anorganische Bindemittel eine AI-Verbindung, gewählt aus der Gruppe, bestehend aus Aluminiumoxid (Al₂O₃), Aluminiumhydroxid (Al(OH)₃) und Böhmit (AlO(OH)), SiO₂ oder Kombinationen davon umfasst, vorzugsweise Al₂O₃ ist.

5. Titandiborid-Granulate gemäß einem der Ansprüche 1 bis 4, wobei die Titandiborid-Granulate eine Siebgrößezwischen 2 und 7 mm aufweisen.

6. Titandiborid-Granulate gemäß einem der Ansprüche 1 bis 5, wobei wenigstens 80 Gew.-% der Titandiborid-Granulate eine Granulatgröße von wenigstens 2 mm aufweisen.

7. Verfahren zur Herstellung von Titandiborid-Granulaten nach einem der Ansprüche 1-6, umfassend die Schritte
a) Mischen von Titandiborid-Pulver mit Bindemittel-Rohstoffen und/oder Hilfsstoffen und/oder Lösungsmitteln,
b) Herstellung von Titandiborid-Granulat-Rohkörpern in der gewünschten Größe,
c) ggf. Trocknung und/oder Entbinderung zur Entfernung von Lösungsmittel und/oder Hilfsstoffen, und
d) thermische Behandlung der Titandiborid-Granulat-Rohkörper zur Herstellung von Titandiborid-Granulaten,
wobei als Bindemittel-Rohstoffe nanoskalige Bindemittel-Rohstoffe oder Precursor-Bindersysteme, die unter den Herstellbedingungen von Schritt b) bis d) nanoskalige Binderpartikel bilden, eingesetzt werden, wobei als Precursor-Bindersystem entweder SiO₂-bildende Bindemittel-Rohstoffe eingesetzt werden, und die Temperaturbehandlung in Schritt d) bei Temperaturen von wenigstens 900°C in inerter Atmosphäre erfolgt, oder als Precursor-Bindersystem Al₂O₃-bildende Bindemittel-Rohstoffe eingesetzt werden und die Temperaturbehandlung in Schritt d) bei Temperaturen von wenigstens 800°C, bevorzugt von wenigstens 1100°C in inerter Atmosphäre erfolgt oder wobei in Schritt a) keine Bindemittel-Rohstoffe eingesetzt werden und wobei die Temperaturbehandlung in Schritt d) bei Temperaturen von mindestens 1100°C, bevorzugt bei Temperaturen zwischen 1800 und 2100°C, besonders bevorzugt bei etwa 2000°C, in inerter Atmosphäre erfolgt.

8. Verfahren zur Herstellung von Titandiborid-Granulaten gemäß Anspruch 7, wobei die mittlere Partikelgröße (d₅₀) des eingesetzten Titandiborid-Pulvers 2 - 20 µm beträgt.

9. Verfahren zur Herstellung von Titandiborid-Granulaten gemäß Anspruch7 oder 8 , wobei als Al₂O₃-bildender Bindemittel-Rohstoff AlO(OH)-Sol-Gel (Böhmit-Sol-Gel) eingesetzt wird.

10. Verwendung von Titandiborid-Granulaten nach einem der Ansprüche 1-6 zur Bedeckung von Kohlenstoff- oder Graphitkathoden in Elektrolysezellen, die bei der Schmelzflusselektrolyse zur Herstellung von A1 eingesetzt werden.

11. Verwendung von Titandiborid-Granulaten nach einem der Ansprüche 1-6 zur Reparatur von Löchern im Kathodenboden von Elektrolysezellen, die bei der Schmelzflusselektrolyse zur Herstellung von A1 eingesetzt werden.

12. Verfahren zur Reparatur von Lochern im Kathodenboden von Elektrolysezellen, die bei der Schmelzflusselektrolyse zur Herstellung von A1 eingesetzt werden, umfassend die folgenden Schritte:
a) Herstellen von Titandiborid-Al-Kompositformkörpern aus Titandiborid-Granulaten nach Anspruch 1 und Aluminium
b) Einbringen der Formkörper in die zu reparierenden Löcher der Kathode während des Betriebs der Zelle.

## Claims

1. Titanium diboride granules comprising aggregates of titanium diboride primary particles, wherein the titanium diboride granules have a rounded shape and are fracture-resistant, wherein the compressive strength of the titanium diboride granules, measured as maximum force before rupture of the granules in the compression test, is at least 5 N, and wherein the titanium diboride granules have a mesh size of between 1 and 10 mm.

2. The titanium diboride granules according to claim 1, wherein the compressive strength of the titanium diboride granules is at least 7 N, preferably at least 9 N, and particularly preferably at least 12 N.

3. The titanium diboride granules according to any of claims 1 or 2, wherein the titanium diboride granules according to the present invention comprise an inorganic binder, preferably an oxidic binder.

4. The titanium diboride granules according to claim 3, wherein the inorganic binder comprises an Al compound selected from the group consisting of aluminum oxide (Al₂O₃), aluminum hydroxide (Al(OH)₃) and boehmite (AIO(OH)), SiO₂ or combinations thereof, preferably Al₂O₃.

5. The titanium diboride granules according to any of claims 1 to 4, wherein the titanium diboride granules have a mesh size between 2 and 7 mm.

6. The titanium diboride granules according to any of claims 1 to 5, wherein at least 80 wt.% of the titanium diboride granules have a granule size of at least 2 mm.

7. A method for producing titanium diboride granules according to any of claims 1-6, comprising the steps of
a) mixing titanium diboride powder with binder raw materials and/or additives and/or solvents,
b) producing titanium diboride granule raw bodies in the desired size,
c) possibly drying and/or debinding to remove solvents and/or additives, and
d) thermally treating the titanium diboride granule raw bodies to produce titanium diboride granules,
wherein nanoscale binder raw materials or precursor binder systems which form nanoscale binder particles under the manufacturing conditions of steps b) to d) are used as binder raw materials, wherein either SiO₂-forming binder raw materials are used as precursor binder system, and the thermal treatment in step d) takes place at temperatures of at least 900°C in an inert atmosphere, or Al₂O₃-forming binder raw materials are used as precursor binder system and the thermal treatment in step d) takes place at temperatures of at least 800°C, preferably at least 1100°C, in an inert atmosphere, or wherein in step a) no binder raw materials are used, and wherein the thermal treatment in step d) takes place at temperatures of at least 1100°C, preferably at temperatures between 1800 and 2100°C, particularly preferably at about 2000°C, in an inert atmosphere.

8. The method for producing titanium diboride granules according to claim 7, wherein the mean particle size (d₅₀) of the titanium diboride powder used is 2-20 µm.

9. The method for producing titanium diboride granules according to claim 7 or 8, wherein AlO(OH) sol gel (boehmite sol gel) is used as an Al₂O₃-forming binder raw material.

10. The use of titanium diboride granules according to any of claims 1-6 for covering carbon or graphite cathodes in electrolytic cells used to produce Al in fused salt electrolysis.

11. The use of titanium diboride granules according to any of claims 1-6 for repairing holes in the cathode base of electrolytic cells used to produce Al in fused salt electrolysis.

12. A method for repairing holes in the cathode base of electrolytic cells used to produce Al in fused salt electrolysis, comprising the following steps of:
a) producing titanium diboride-Al composite shaped bodies from titanium diboride granules according to claim 1 and aluminum,
b) introducing the shaped bodies into the holes of the cathode to be repaired during operation of the cell.

## Revendications

1. Granules de diborure de titane, comprenant des agrégats de particules primaires de diborure de titane, dans lesquels les granules de diborure de titane présentent une forme arrondie et sont résistants à la rupture, dans lesquels la résistance à la pression des granules de diborure de titane, mesurée en tant que force maximale jusqu'à rupture des granules dans un essai de pression, est d'au moins 5 N et dans lesquels les granules de diborure de titane présentent une taille de maille de 1 à 10 mm.

2. Granules de diborure de titane selon la revendication 1, dans lesquels la résistance à la pression des granules de diborure de titane est d'au moins 7 N, de préférence au moins 9 N et plus préférablement au moins 12 N.

3. Granules de diborure de titane selon l'une des revendications 1 ou 2, dans lesquelles les granules de diborure de titane selon l'invention comprennent un liant anorganique, de préférence un liant oxydique.

4. Granules de diborure de titane selon la revendication 3, dans lesquels le liant anorganique comprend un composé d'aluminium, choisi dans le groupe constitué d'oxyde d'aluminium (Al₂O₃), hydroxyde d'aluminium (Al(OH)₃) et boehmite (AlO(OH)), du SiO₂ ou des combinaisons de ceux-ci, de préférence de l'Al₂O₃.

5. Granules de diborure de titane selon l'une des revendications 1 à 4, dans lesquels les granules de diborure de titane présentent une taille de maille de 2 à 7 mm.

6. Granules de diborure de titane selon l'une des revendications 1 à 5, dans lesquels au moins 80 % en poids des granules de diborure de titane présentent une taille de granules d'au moins 2 mm.

7. Procédé de fabrication de granules de diborure de titane selon l'une des revendications 1 à 6, comprenant les étapes de
a) mélange de poudre de diborure de titane avec des matières premières de liant et/ou des substances auxiliaires et/ou des solvants,
b) fabrication de corps bruts de granules de diborure de titane de la taille souhaitée,
c) le cas échéant séchage et/ou enlèvement du liant pour l'élimination des solvants et/ou des substances auxiliaires et
d) traitement thermique des corps bruts de granules de diborure de titane pour la fabrication de granules de diborure de titane,
dans lequel, en tant que matières premières de liant, des matières premières de liant nanométriques ou des systèmes de liant précurseur, qui forment, dans les conditions de fabrication des étapes b) à d), des particules de liant nanométriques, sont utilisées, dans lequel, en tant que système de liant précurseur, soit des matières premières de liant formant du SiO₂ sont utilisées et le traitement thermique de l'étape d) est réalisé à des températures d'au moins 900 °C sous atmosphère inerte, soit, en tant que système de liant précurseur, des matières premières de liant formant de l'Al₂O₃ sont utilisées et le traitement thermique de l'étape d) est réalisé à des températures d'au moins 800 °C, de préférence d'au moins 1100 °C sous atmosphère inerte, soit dans lequel, dans l'étape a), aucune matière première de liant n'est utilisée et dans lequel le traitement thermique de l'étape d) est réalisé à des températures d'au moins 1100 °C, de préférence à des températures de 1800 à 2100 °C, encore plus préférablement d'environ 2000 °C, sous atmosphère inerte.

8. Procédé de fabrication de granules de diborure de titane selon la revendication 7, dans lequel la taille moyenne de particule (d₅₀) de la poudre de diborure de titane utilisée est de 2 à 20 µm.

9. Procédé de fabrication de granules de diborure de titane selon la revendication 7 ou 8, dans lequel de l'AlO(OH)-Sol-Gel (boehmite Sol-Gel) est utilisée en tant que matière première de liant formant de l'Al₂O₃.

10. Utilisation de granules de diborure de titane selon l'une des revendications 1 à 6 pour le recouvrement de cathodes en graphite ou en carbone dans des cellules d'électrolyse, qui sont utilisées pour la fabrication d'aluminium lors de l'électrolyse en bain fondu.

11. Utilisation de granules de diborure de titane selon l'une des revendications 1 à 6 pour la réparation de trous dans des fonds de cathode de cellules d'électrolyse, qui sont utilisées pour la fabrication d'aluminium lors de l'électrolyse en bain fondu.

12. Procédé de réparation de trous dans des fonds de cathode de cellules d'électrolyse, qui sont utilisées pour la fabrication d'aluminium lors de l'électrolyse en bain fondu, comprenant les étapes suivantes :
a) fabrication de corps formés composites d'aluminium et diborure de titane à partir de granules de diborure de titane selon la revendication 1 et d'aluminium
b) introduction des corps formés dans les trous à réparer de la cathode pendant l'utilisation de la cellule.
